# EUROPEAN PATENT SPECIFICATION

(11) **EP 3 098 187 B1**
(45) Date of publication and mention of the grant of the patent: **27.02.2019**
(21) Application number: 16171838.2
(22) Date of filing: 27.05.2016
(51) Int. Cl.: B65G 47/34, B07C 3/02, B65G 47/96, B65G 47/64

(54) **DEVICE FOR TRANSPORTING, STORING, SORTING AND DISCHARGING POSTAL ITEMS**
VORRICHTUNG ZUM TRANSPORTIEREN, LAGERN, SORTIEREN UND ENTLADEN VON POSTSENDUNGEN
DISPOSITIF POUR TRANSPORTER, STOCKER, TRIER ET DÉCHARGER DES ARTICLES POSTAUX

(30) Priority: 28.05.2015 IT UB20151166
(43) Date of publication of application: 30.11.2016
(73) Proprietor: LEONARDO S.p.A., 00195 Roma (IT)
(72) Inventor: DE LEO, Guido Teodoro, 16134 GENOVA (IT)
(74) Representative: Bongiovanni, Simone

(56) References cited:
- EP-A2- 0 613 730

## Description

The present invention relates to a device for transporting, storing and discharging postal items.

Postal sorting systems generically comprise a base sorting backbone (for example, configured in a loop and provided with one or more levels) cooperating with a plurality of input lines and a plurality of output lines. In the case of a number of low-traffic destinations, the sorting of postal items and their transfer to final containers located outside the line is implemented by using a small number of pre-sorting outlets, from which the items are transferred by manual operations that are onerous in terms of cost and time.

The present invention has the object of advantageously equipping such a pre-sorting outlet, used for low-traffic destinations in particular, and implementing a system that enables sorting the items to a plurality of outlets associated with the different destinations in a simple and efficacious manner.

The object of the present invention is also to provide a system having low horizontal and vertical space occupation and that is both modular and structurally simple, in installation and maintenance.

The document EP 0 613 730 A2 discloses a device for transporting, storing and discharging postal items comprising:
- a plurality of modules arranged aligned with respect to one another along a first rectilinear direction; each module being provided with a trolley moveable by reversible rectilinear motion under the bias of first motor means along a second rectilinear direction transverse to the first direction between a first parking position and at least one second parking position; each trolley being provided with a belt, which extends between opposite end portions of the trolley and is moveable along a direction parallel to the first direction according to selectable opposite directions under the bias of second motor means;
- an electronic control unit of said transporting device adapted to implement:
- a transporting mode of the items, wherein at least one pair of trolleys belonging to following adjacent modules are arranged in corresponding parking positions and the postal items proceed along said first rectilinear direction transiting from one module to the adjacent one under the bias of the belts which move in the same direction.

The foregoing object is achieved by the present invention in so far as it relates to a device for transporting, storing and discharging postal items, characterized in that it comprises:
- a plurality of modules arranged aligned with respect to one another along a first rectilinear direction; each module being provided with a trolley movable with reversible rectilinear motion under the driving force of first motor means along a second rectilinear direction transversal to the first
   direction between a first parking position and at least a second parking position; each trolley being provided with a belt, which extends between opposite end portions of the trolley and is movable along a direction parallel to the first direction in selectable opposite directions under the driving force of second motor means; - two first outlets arranged under the trolleys when they are arranged in the respective first positions and two second outlets arranged under said trolleys when they are arranged in a different parking position; said first/second outlets are adapted to receive the postal objects that are discharged from opposite end portions of the trolleys of contiguous modules following the motion of its belt; - an electronic control unit (25) of said transport device adapted to implement: - a transport mode for transporting items, wherein at least one pair of trolleys belonging to successive adjacent modules is arranged in corresponding parking positions and the postal items proceed along said first rectilinear direction, transiting from one module to the adjacent one under the action of the belts, which move in the same direction; and - a discharge mode for discharging to four outlets A, B, C and D, wherein at least one trolley (12) of a selected intermediate module is arranged in either the first or second position and at least one of the trolleys belonging to modules adjacent to the selected one is arranged in a different, second or first, position; the motion of the belt of the trolley of the selected module towards the following adjacent module allows directing the postal items carried by the belt towards an outlet B or an outlet D belonging to the first/second outlets of the following adjacent module; the motion of the belt towards the preceding adjacent module allows directing the postal items carried by the belt 16 towards an outlet A or an outlet C belonging to the first/second outlets of the preceding adjacent module and/or the motion of the belt of the trolley belonging to the preceding adjacent module towards the selected module allows directing the objects towards the outlet B or the outlet D belonging to the first/second outlets of the selected module; the motion of the belt of the trolley belonging to the following adjacent module towards the selected module allows directing the objects towards the outlet A or the outlet C belonging to the first/second outlets of the selected module.

The invention will now be illustrated with reference to the accompanying drawings, which represent a preferred non-limitative embodiment, in which:
Figures 1 and 2 show, in a simplified top view, a device for transporting, storing and discharging postal items made according to the principles of the present invention;
Figures 3 and 4 show, in section along planes A and B of Figure 1, a device for transporting, storing and discharging postal items made according to the principles of the present invention;
Figure 5 shows an example of using the device according to the present invention;
Figures 6A, 6B, 6C, 6D, 6E and 6F show successive steps implemented by the device according to the present invention; and
Figures 7 and 8 illustrate an operating mode of the transport device.

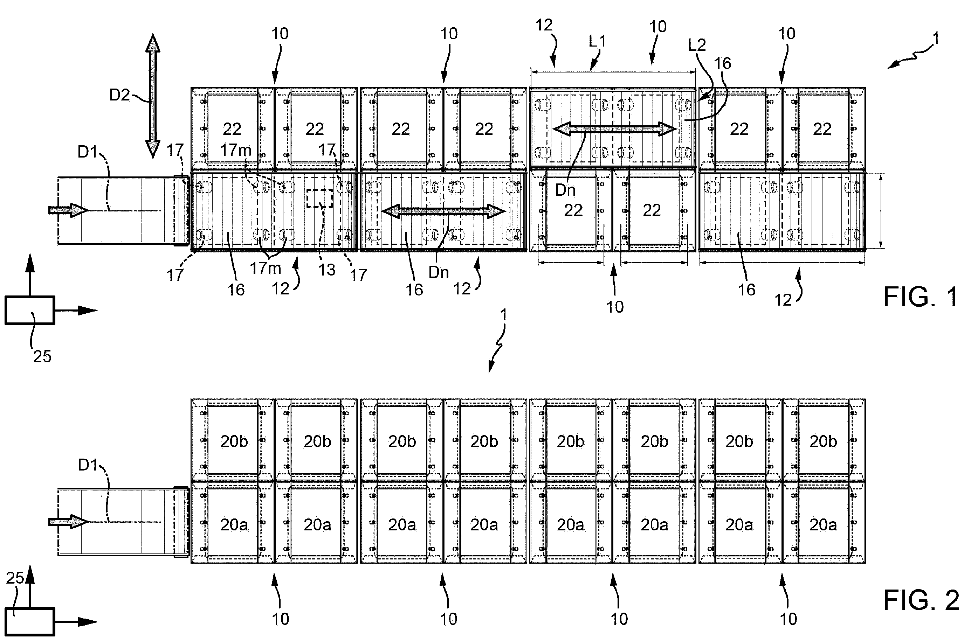

In Figures 1 to 4, reference numeral 1 indicates, as a whole, a device for transporting, storing and discharging postal items.

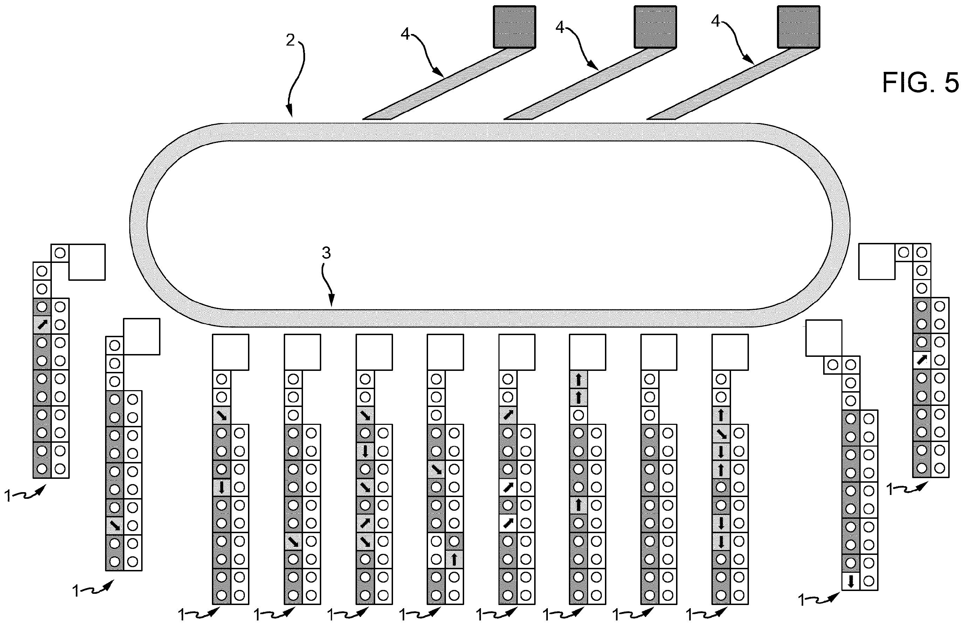

The device 1 can be conveniently used in a postal sorting system 2 (Figure 5) consisting of a base sorting backbone 3 (for example, configured in a loop) and equipped with a plurality of entry lines 4 (three in the example) and a plurality of pre-sorting output lines implemented by respective devices 1. However, it is clear that there are a whole range of applications for the transport device 1 and these can be different from that shown in Figure 5. Much more generically, the device 1 is able to work with a postal system capable of supplying single postal items 7 (typically small parcels) to the entrance of the transport device 1.

The device 1 comprises a plurality of modules 10 arranged aligned with respect to one another along a first rectilinear direction D1; each module 10 is provided on the upper part with a trolley (12) movable with reversible rectilinear motion under the driving force of a first motor 13 (schematically shown) along a second rectilinear direction D2 transversal to the first direction (D1) between a first end-stop position and a second end-stop position. All the modules 10 have the same structure and same dimensions so that the trolleys 12 move along the same horizontal plane.

In Figures 1 and 2, the modules 10 are shown seen from above; it can be seen that these have a rectangular perimeter in plan (typically having suitable dimensions to contain two pairs of sacks or containers, chosen in the design stage, for storing sorted items) with a pair of first sides facing each other and parallel to direction D1.

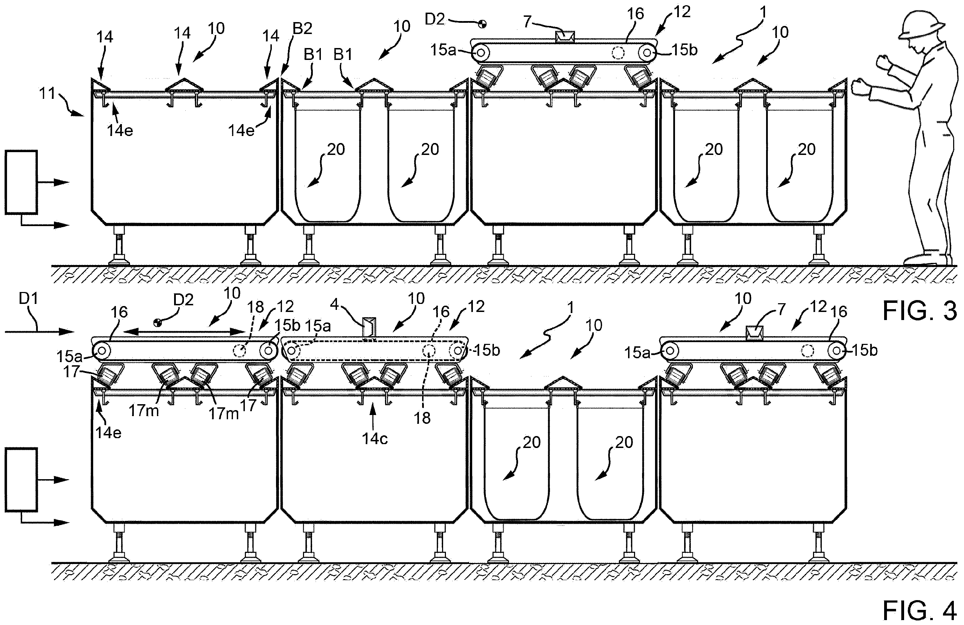

In Figures 3 and 4 the modules are shown in side view; each module comprises a frame 11 that delineates a parallelepiped provided with an upper portion that carries a plurality of rectilinear guides 14 used for movement the trolley 12, with a useful height for easy collection of a sack or container and its replacement with an empty one, and a lower portion to support the bottom of the sacks or containers, everything resting on the floor by means of specially provided risers. Each trolley 12 (Figures 1) has a rectangular shape in plan with a longer side L1 substantially equal in length to a first side of the perimeter of the module 10 and a shorter side L2 smaller than or equal (equal in the example) to half the length of a second side of the perimeter of the module 10. When the trolley 12 is arranged in the first position, it covers a first portion of the area of the module 10, while when it is arranged in the second position, it covers a second portion of the area of the module 10.

The trolley 12 is equipped with a powered belt 16 that extends between opposite end rollers 15a and 15b (Figures 1 and 2) that form opposite ends of the trolley 12. The belt 16 is movable along a direction Dn parallel to the first direction D1 in selectable opposite directions under the driving force of a second motor 17 associated with the trolley 12.

The belt 16 is expediently provided with raised peripheral edges that extend along the first direction D1.

The trolley 12 is shown schematically; thus, neither the support structure of the trolley nor the transmission that connects the output of the second motor 17 to the rollers 15a and 15b is shown. Four external sliding wheels 17, typically idle, which slide along rectilinear end guides 14e that are arranged at the corners of the trolley 12, and two pairs of wheels 17m powered by the motor 17, which slide along a central rectilinear guide 14c parallel to and equidistant from guides 14e, are shown.

Each module 10 defines four discharge outlets implemented by respective containers 20 housed inside the frame 11. The containers 20 are accessible from above via inlet openings 22 that open beneath the plane on which the trolleys 12 move. The four openings 22 are arranged symmetrically in the module 10 according to an arrangement that forms a matrix in plan view. In the example shown, the openings 22 have, in plan, a square shape with one side slightly less than half the first/second side of the module 10 (which in the example has a square perimeter, in plan view). In this way, the length of each trolley L1 measured along the first direction D1 is significantly equal to the space S1+S2 occupied by two outlets 20 side-by-side along the first direction. In the embodiment shown, the containers 20 consist of sacks provided with a top edge hooked to an upper portion of the frame 11 through the interposition of a quick hooking/release system (of known type).

Each rectilinear guide is defined by an elongated flat wall delimited, along direction D2, by a first longer edge B1 near the openings 22 and by a second longer edge B2 distant from the openings 22, which is arranged at a height greater than the height of the first edge B1: in this way, the flat wall is arranged inclined with respect to the vertical and forms a chute able to aid postal items in falling into the openings 22 in the event of them striking said guide.

The above-described arrangements and dimensional relations provide a plurality of uncovered first outlets 20a (Figure 2, also indicated as A and B) that are accessible from adjacent trolleys 12 when the trolley 12 of the associated module is arranged in the respective second position and a plurality of uncovered second outlets 20b (Figure 2, also indicated as C and D) that are accessible from adjacent trolleys when the trolley of the associated module is arranged in the first position.

The first outlets 20a are designed to receive postal items that are discharged from opposite end portions of the adjacent trolleys 12 following movement of the belt 16 when the trolleys are respectively arranged in the first end positions. Similarly, the second outlets 20b are designed to receive postal items that are discharged from opposite end portions of the adjacent trolleys 12 following movement of the belt 16 when the trolleys are respectively arranged in the second end positions.

The movement of the trolleys is controlled by an electronic unit 25, which controls the motors 13 and 17 to place the trolleys of each module 10 in a first/different end-stop position and to control the movement of the belts 16.

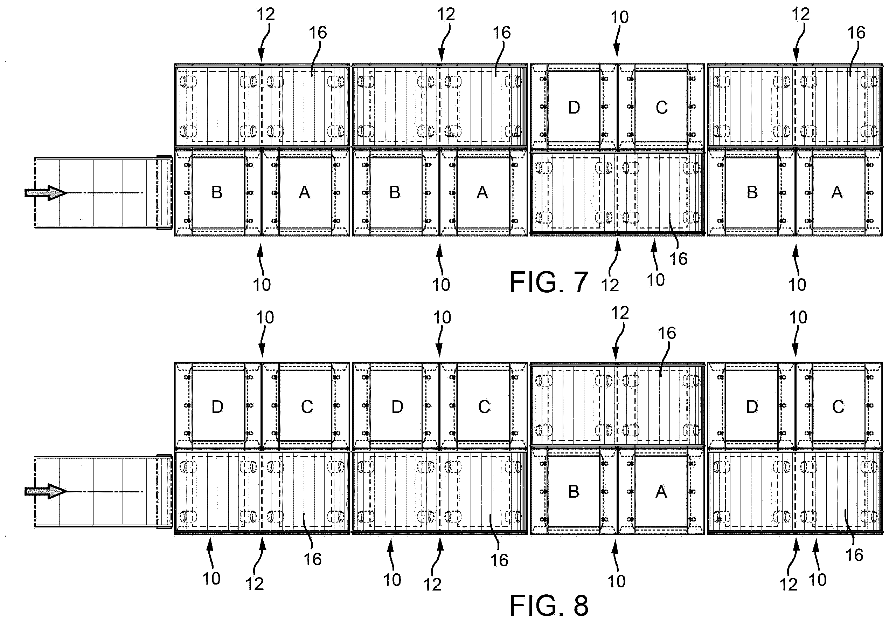

The commands issued by the electronic unit 25 are designed to implement:
a transport mode for transporting items, wherein a plurality of trolleys 12 belonging to different modules 10 are arranged in the first or in a different second position (see Figures 7 and 8) and the postal items proceed along the rectilinear direction transiting from one module to the adjacent one under the action of the belts 16, which move in the same direction; and
a discharge mode for discharging to four outlets A, B, C and D, wherein at least one trolley 12 of a selected module, for example an intermediate module, is arranged in the first or in a different second position and the trolleys 12 belonging to modules adjacent to the one selected are arranged in a different second or first position (Figures 7 and 8 specifically show these possibilities) . The movement of the belt of the selected trolley towards the following adjacent module enables directing the postal items carried by the belt 16 towards an outlet B (Figure 7) or an outlet D (Figure 8) belonging to the first/second outlets of the following (adjacent) module; movement of the belt towards the preceding adjacent module enables directing the postal items carried by the belt 16 towards an outlet A (Figure 7) or an outlet C (Figure 8) belonging to the first/second outlets of the preceding (adjacent) module.

The movement of the belt of the trolley belonging to the preceding adjacent module towards the selected module enables directing the items towards outlet B (Figure 8) or outlet D (Figure 7) belonging to the first/second outlets of the selected module and/or the movement of the belt of the trolley belonging to the following adjacent module towards the selected module enables directing the items towards outlet A (Figure 8) or outlet C (Figure 7) belonging to the first/second outlets of the selected module.

The movement of the belts of the trolleys belonging to the adjacent modules in a first or second direction enables directing the items towards outlets B/D or outlets C/D belonging to the first/second outlets, respectively. Furthermore, the trolleys 12 may be arranged in a storage mode, under which at least one of the following functions is implemented:
a) a belt 16 free from postal items receives a postal item from the belt of an adjacent module and moves until this item is arranged within the first portion of the belt and then waits for at least one further object from the adjacent module;
b) a belt 16 supporting at least one item arranged on the first portion of the belt receives a further postal item from the belt of an adjacent module by moving to cause translation of the preceding item(s) to the second portion and receiving the further object(s) in the first portion of the belt;
c) a belt 16 that supports postal items arranged on the first and on the second portion of the belts moves to release the carried items onto the adjacent module by performing either the complete transfer or a partial transfer of the items arranged only on the second portion.

In particular, operations b) and c) may be carried out simultaneously on the same module or on several adjacent modules.

This functioning shall be described with reference to the example in the accompanying drawings, which illustrate one of the multiple operating modes that can be achieved.

A limited number of modules are shown in the example for simplicity - a total of four modules 10.

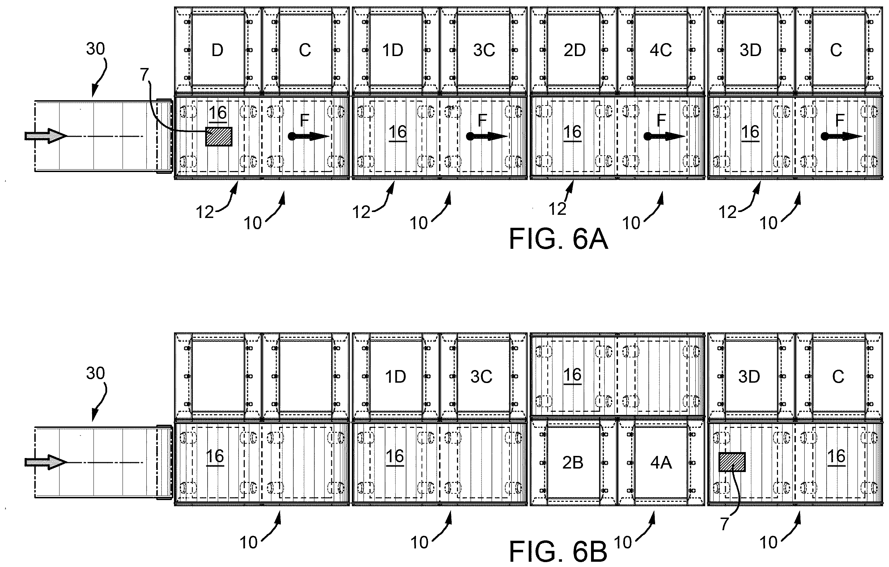

Initially (Figure 6A), the trolleys 13 of the first four modules 10 are arranged in the first position and all implement the first transport mode. In this mode, the belts 16 are all aligned with each other. The end of one belt 16 in near that of an adjacent belt 16. The belts 16 are also substantially coplanar. A postal item 7 can be placed on the belt of the first module 1 (which implements an entrance of the device 1) by means of an induction system 30 (of known type and shown schematically), while the belts are all in movement in the same direction (for example, a Forward direction that moves the belts from left to right as shown in the drawing - see arrow F) and at the same speed. The postal item 7, which in this example is destined for the fourth outlet (ref. A) passes from the first module to the belt of the second module and from this to the belt of the third module and, finally, to the belt of the fourth module. When the postal item 7 reaches the belt 16 of the fourth module 10, the movement of the belt of the fourth module is interrupted at an opportune moment to preferable place the postal item near the discharge end of the belt 16 (Figure 6B), unless it is advisable to load an immediately following further item 7 that it destined for the same outlet.

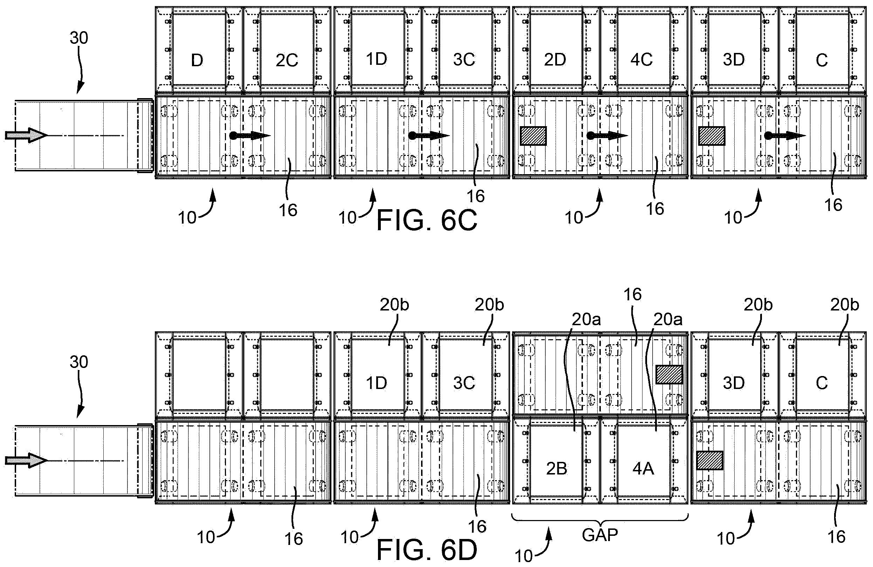

For example, Figure 6C shows a further postal item 7 placed on the belt of the first module by the (schematically shown) induction system 30, while the belts 16 of the first modules 10 are in movement in the same direction and at the same speed. The postal item 7 passes from the first module to the belt of the second module and from this to the belt of the third module.

If the item 7 in this example is destined for one of the second outlets 3C or 3D, as soon as the item is free of the belt of the preceding module, the motor 13 of the third module is operated, moving the trolley to the second position, unless a further item 7 destined for outlets 3A or 3C immediately follows.

In the meanwhile, the belt of the third module is left in motion until the item(s) 7 is/are positioned in the optimal position(s) for rapid and reliable discharge (Figure 6D). A gap GAP is thus created between the belts of the second and the fourth modules 10 and the two containers 20a (identified as 2B and 4A in Fig. 6D) of the third module are accessible from above as they are no longer covered by the trolley 12, which has moved. The ends of the belt 16 of the third module face respective containers 20b (identified as 3C and 3D in Fig. 6D) of adjacent modules 10 (left uncovered by the respective trolleys that are in a first position above containers 20a).

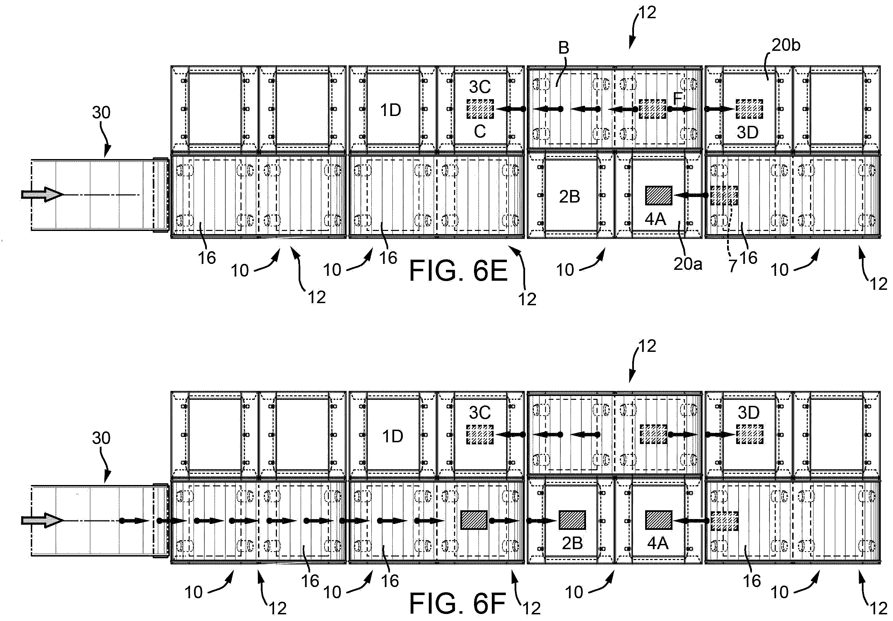

The trolley 12 of the first two modules is arranged in the first position, the trolley 12 of the third module is arranged in the second position and carries an item 7, the trolley 12 of the fourth module is arranged in the first position and carries an item 7 (Figure 6D). Motion of the belt of the third module 10 in a first direction, Forward (Figure 6E, arrow F), enables directing the item to a first container 20b (outlet identifier 3D); motion of the belt of the third module 10 in a second direction, Backward (Figure 6E, arrow B), enables directing the item to a second container 20b (identifier 3C).

By making the belt of the fourth module move with Backward motion B, the item 7 can be sent towards a first container 20a of the selected module (identifier 4A). In the example shown, the fourth module 10 is the last module of the device. For this reason, motion of the belt 16 of the fourth container in the Forward direction causes the discharge of the postal item from the device 1. In this regard, the outlet of the device 1 may be connected to a further outlet, or may communicate with a different device, by means of a transport system that is not shown, or with the outlet of another/other device(s) 1 having an identical (same number of modules) or similar structure (different number of modules).

By feeding a following postal item to the belt of the first module and making the belt of the first and the second module move in the Forward direction, it is possible to transfer the item towards a second container 20a or 20b (for example, to the outlet identified as 2B in Figure 6F) of a selected module.

It is therefore possible to have access to four outlets accessible from the outside via each single trolley.

The end module 10 distant from the inlet where the postal items are fed to the system 1 can be equipped with a shortened belt having a length equal to half the length of the belt 16, while still keeping four outlets in the module, in order to reduce the total length of the device 1 without reducing the number of outlets with containers 20a and 20b, effectively obtaining the side-by-side arrangement of outlets 4B and 4D with outlets 3B and 3D in Figure 6A-6F.

The module employs a simple robust system that uses a small number of active components (motors 13 and 17) and low power, without vertical movements of parts or the lifting of items 7.

## Claims

1. A device for transporting, storing and discharging postal items, comprising:
- a plurality of modules (10) arranged aligned with respect to one another along a first rectilinear direction (D1); each module (10) being provided with a trolley (12) movable with reversible rectilinear motion under the driving force of first motor means (13) along a second rectilinear direction (D2) transversal to the first direction (D1) between a first parking position and at least a second parking position; each trolley (12) being provided with a belt (16), which extends between opposite end portions (15a, 15b) of the trolley and is movable along a direction (Dn) parallel to the first direction (D1) in selectable opposite directions under the driving force of second motor means (17);
- two first outlets (20a) arranged under each trolley (12) when it is arranged in the respective first position and two second outlets (20b) arranged under each trolley-s- when it is arranged in a different parking position; said first/second outlets are adapted to receive the postal objects that are discharged from opposite end portions of the trolleys (15a, 15b) of contiguous modules following the motion of its belt (16);
- an electronic control unit (25) of said transport device adapted to implement:
- a transport mode for transporting items, wherein at least one pair of trolleys belonging to successive adjacent modules is arranged in corresponding parking positions and the postal items proceed along said first rectilinear direction (D1), transiting from one module to the adjacent one under the action of the belts (16), which move in the same direction; and
- a discharge mode for discharging to four outlets A, B, C and D, wherein at least one trolley (12) of a selected intermediate module is arranged in either the first or second position and at least one of the trolleys (12) belonging to modules adjacent to the selected one is arranged in a different, second or first, position; the motion of the belt of the trolley of the selected module towards the following adjacent module allows directing the postal items carried by the belt (16) towards an outlet B or an outlet D belonging to the first/second outlets of the following adjacent module; the motion of the belt towards the preceding adjacent module allows directing the postal items carried by the belt 16 either towards an outlet A or an outlet C belonging to the first/second outlets of the preceding adjacent module; the motion of the belt of the trolley belonging to the preceding adjacent module towards the selected module allows directing the objects either towards the outlet B or towards the outlet D belonging to the first/second outlets of the selected module; the motion of the belt of the trolley belonging to the following adjacent module towards the selected module allows directing the objects either towards the outlet A or towards the outlet C belonging to the first/second outlets of the selected module.

2. A device according to claim 1, wherein one or more trolleys (12) may be arranged in a storage mode, according to which the following functions are implemented:
a) a belt (16) free from postal items receives a postal item from the belt of an adjacent module and moves until this item is arranged within the first portion of the belt and then waits for at least one further object from the adjacent module;
b) a belt (16) supporting at least one item arranged on the first portion of the belt receives a further postal item from the belt of an adjacent module by moving to cause translation of the preceding item to the second portion and receiving the further object in the first half of the portion;
c) a belt (16) that supports postal items arranged on the second portion of the belts moves to release the carried items onto the adjacent module by performing either the complete transfer or a partial transfer of the items arranged only on the second portion.

3. A device according to claim 2, wherein said operations b) and c) may be carried out simultaneously.

4. A device according to any one of the preceding claims, wherein each trolley (12) has a rectangular shape in plan with a longer side substantially equal in length to a first side of the perimeter of the module (10) and a shorter side either smaller than or equal to half the side of a second side of the perimeter of the module (10); when the trolley is arranged on the first position, the trolley covers a first portion of the area of the module, while when the trolley is arranged on the second position, the trolley covers a different portion of the area of the module.

5. A device according to any one of the preceding claims, wherein each module (10) defines four discharge outlets consisting of respective containers (20) carried by a frame (11) of the module (10); the containers (20) are accessible by means of inlet openings (22) arranged underneath the plane on which the trolleys (12) are movable.

6. A device according to any one of the preceding claims, wherein the openings (22) are arranged symmetrically in the module (10) according to a matrix arrangement.

7. A device according to claim 6, wherein the openings (22) have, in plan view, a rectangular shape with sides slightly smaller than half the sides of the module (10).

8. A device according to any one of the preceding claims, wherein the length of each trolley measured along the first direction is substantially equal to the space occupied by the frame (11) that houses pairs of outlets arranged side-by-side along said first direction.

9. A device according to claim 5, wherein each trolley (12) is movable along at least one pair of rectilinear guides (14) carried by an upper portion of a frame (11) of said module.

10. A device according to claim 9, wherein
each rectilinear guide is defined by an elongated flat wall delimited, along direction D2, by a first longer edge near the openings (22) and by a second longer edge distant from the openings (22), which is arranged at a height greater than the height of the first edge; said flat wall is arranged inclined with respect to the vertical and forms a chute able to aid postal items that accidentally strike the guide to fall towards the opening (22).

11. A device according to any one of the preceding claims, wherein the remote end module (10) with respect to the inlet from which the postal items are fed to the system (1) is provided with a shortened belt having a length equal to half the length of the other belts (16).

12. A device according to any one of the preceding claims, wherein said belt (16) is provided with raised peripheral edges that extend along said first direction (D1).

## Patentansprüche

1. Vorrichtung zum Transportieren, Lagern und Entladen von Poststücken, mit:
- mehreren Modulen (10), die in Bezug zueinander entlang einer ersten geraden Richtung (D1) ausgerichtet sind; wobei jedes Modul (10) mit einem Wagen (12) versehen ist, der durch die Antriebskraft einer ersten Motoreinrichtung (13) entlang einer zu der ersten Richtung (D1) querverlaufenden zweiten geraden Richtung (D2) zwischen einer ersten Parkposition und mindestens einer zweiten Parkposition durch reversible gerade Bewegung bewegbar ist; wobei jeder Wagen (12) mit einem Band (16) versehen ist, das sich zwischen entgegengesetzten Endbereichen (15a, 15b) des Wagens erstreckt und unter der Antriebswirkung einer zweiten Motoreinrichtung (17) in einer parallel zur ersten Richtung (D1) verlaufenden Richtung (Dn) in wählbaren entgegengesetzten Richtungen bewegbar ist;
- zwei ersten Auslässen (20a), die unter jedem Wagen (12) angeordnet sind, wenn dieser in der jeweiligen ersten Position angeordnet ist, und zwei zweiten Auslässen (20b), die unter jedem Wagen angeordnet sind, wenn dieser in einer anderen Parkposition angeordnet ist; wobei die ersten/zweiten Auslässe geeignet sind, die Poststücke, die von entgegengesetzten Endbereichen (15a, 15b) der Wagen aneinandergrenzender Module entsprechend der Bewegung des Bandes (16) derselben entladen werden, aufzunehmen;
- einer elektronischen Steuereinheit (25) der Transportvorrichtung, die geeignet ist, folgendes zu implementieren:
- einen Transportmodus zum Transportieren von Poststücken, wobei mindestens zwei Wagen, die zu aufeinanderfolgenden benachbarten Modulen gehören, in entsprechenden Parkpositionen angeordnet sind und die Poststücke in der ersten geraden Richtung (D1) bewegt werden, wobei sie mittels der sich in der gleichen Richtung bewegenden Bänder (16) von einem Modul zum benachbarten Modul übergehen; und
- einen Entlademodus zum Entladen an vier Auslässe A, B, C und D, wobei mindestens ein Wagen (12) eines ausgewählten Zwischenmoduls in entweder der ersten oder der zweiten Position angeordnet ist und mindestens einer der Wagen (12), die zu Modulen gehören, welche dem gewählten Modul benachbart sind, in einer anderen, der zweiten oder ersten Position angeordnet ist; wobei das Bewegen des Bandes des Wagens des ausgewählten Moduls in Richtung des nachfolgenden benachbarten Moduls ermöglicht, die von dem Band (16) getragenen Poststücke zu einem Auslass B oder einem Auslass D zu leiten, welche zu den ersten/zweiten Auslässen des nachfolgenden benachbarten Moduls gehören; wobei das Bewegen des Bandes in Richtung des vorangehenden benachbarten Moduls ermöglicht, die von dem Band (16) getragenen Poststücke entweder zu einem Auslass A oder einem Auslass C zu leiten, welche zu den ersten/zweiten Auslässen des vorangehenden benachbarten Moduls gehören; wobei das Bewegen des Bandes des Wagens, der zu dem vorangehenden benachbarten Modul gehört, in Richtung des ausgewählten Moduls ermöglicht, die Poststücke entweder zu dem Auslass B oder dem Auslass D zu leiten, welche zu den ersten/zweiten Auslässen des ausgewählten Moduls gehören; wobei das Bewegen des Bandes des Wagens, der zu dem nachfolgenden benachbarten Modul gehört, in Richtung des ausgewählten Moduls ermöglicht, die Poststücke entweder zu dem Auslass A oder dem Auslass C zu leiten, welche zu den ersten/zweiten Auslässen des ausgewählten Moduls gehören.

2. Vorrichtung nach Anspruch 1, bei welcher ein oder mehr Wagen (12) in einem Lagermodus angeordnet sein können, bei welchem die folgenden Funktionen implementiert sind:
a) ein von Poststücken freies Band (16) empfängt ein Poststück von dem Riemen eines benachbarten Moduls und bewegt sich, bis dieses Poststück innerhalb des ersten Bereichs des Bandes angeordnet ist, und wartet anschließend auf mindestens ein weiteres Poststück von dem benachbarten Modul;
b) ein mindestens ein auf dem ersten Bereich des Bandes angeordnetes Poststück stützendes Band (16) empfängt ein weiteres Poststück von dem Band eines benachbarten Moduls, indem es sich bewegt, um eine Verschiebung des vorhergehenden Poststücks zu dem zweiten Bereich zu bewirken und das weitere Poststück in der ersten Hälfte des Bereichs zu empfangen;
c) ein Band (16), das ein auf dem zweiten Bereich des Bandes angeordnetes Poststück stützt, bewegt sich, um die getragenen Poststücke auf das benachbarte Modul abzugeben, indem es entweder den gesamten Transfer oder einen teilweisen Transfer der nur auf dem zweiten Bereich angeordneten Poststücke durchführt.

3. Vorrichtung nach Anspruch 2, bei welcher die Operationen b) und c) gleichzeitig durchgeführt werden können.

4. Vorrichtung nach einem der vorhergehenden Ansprüche, bei welcher jeder Wagen (12) in Draufsicht eine Rechteckform mit einer längeren Seite, die im Wesentlichen die gleiche Länge wie eine Seite des Umfangs des Moduls (10) aufweist, und einer kürzeren Seite aufweist, die entweder kleiner als oder gleich der Hälfte der Seite einer zweiten Seite des Umfangs des Moduls (10) ist; wobei der Wagen, wenn der Wagen in der ersten Position angeordnet ist, einen ersten Bereich der Fläche des Moduls bedeckt, während der Wagen, wenn der Wagen in der zweiten Position angeordnet ist, einen anderen Bereich der Fläche des Moduls bedeckt.

5. Vorrichtung nach einem der vorhergehenden Ansprüche, bei welcher jedes Modul (10) vier Entladeausgänge definiert, die aus jeweiligen Behältern (20) bestehen, welche von einem Rahmen (11) des Moduls (10) getragen sind; wobei die Behälter (20) über Einlassöffnungen zugänglich sind, die unter der Ebene angeordnet sind, auf welcher die Wagen (12) bewegbar sind.

6. Vorrichtung nach einem der vorhergehenden Ansprüche, bei welcher die Öffnungen (22) nach einer Matrixanordnung symmetrisch in dem Modul (10) angeordnet sind.

7. Vorrichtung nach Anspruch 6, bei welcher die Öffnungen (22) in Draufsicht eine Rechteckform mit Seiten aufweisen, die geringfügig kleiner als die Hälfte der Seiten des Moduls (10) sind.

8. Vorrichtung nach einem der vorhergehenden Ansprüche, bei welcher die Länge jedes Wagens gemessen entlang der ersten Richtung im Wesentlichen gleich dem Raum ist, den der Rahmen (11) einnimmt, welcher Paare von nebeneinander in der ersten Richtung angeordnete Auslässen aufnimmt.

9. Vorrichtung nach Anspruch 5, bei welcher jeder Wagen (12) entlang mindestens zwei gerader Führungen (14) bewegbar ist, welche von einem oberen Bereich eines Rahmens (11) des Moduls getragen sind.

10. Vorrichtung nach Anspruch 8, bei welcher jede gerade Führung durch eine langgestreckte ebene Wand definiert ist, die in der Richtung D2 durch eine erste längere Kante nahe den Öffnungen (22) und durch eine von den Öffnungen (22) entfernte zweite längere Kante, die in einer größeren Höhe als die erste Kante angeordnet ist, begrenzt ist; wobei die ebene Wand in Bezug auf die Vertikale geneigt angeordnet ist und eine Rutsche bildet, die geeignet ist, Poststücke, die zufällig gegen die Führung stoßen, zu helfen, in Richtung der Öffnung (22) zu fallen.

11. Vorrichtung nach einem der vorhergehenden Ansprüche, bei welcher das an dem in Bezug auf den Einlass, von welchem die Poststücke in das System (1) eingeführt werden, entfernten Ende gelegene Modul mit einem verkürzten Band versehen ist, das eine Länge gleich der Hälfte der Länge der anderen Bänder (16) aufweist.

12. Vorrichtung nach einem der vorhergehenden Ansprüche, bei welcher das Band (16) mit erhabenen Umfangsrändern versehen ist, die sich entlang der ersten Richtung D1 erstrecken.

## Revendications

1. Dispositif pour transporter, stocker et décharger des articles postaux, comprenant :
- une pluralité de modules (10) agencés alignés les uns par rapport aux autres le long d'une première direction rectiligne (D1) ; chaque module (10) étant pourvu d'un chariot (12) mobile avec un mouvement rectiligne réversible sous la force d'entraînement d'un premier moyen moteur (13) le long d'une deuxième direction rectiligne (D2) transversale à la première direction (D1) entre une première position de stationnement et au moins une deuxième position de stationnement ; chaque chariot (12) étant pourvu d'une courroie (16), qui s'étend entre des parties d'extrémité opposées (15a, 15b) du chariot et est mobile le long d'une direction (Dn) parallèle à la première direction (D1) dans des directions opposées sélectionnables sous la force d'entraînement d'un deuxième moyen moteur (17) ;
- deux premières sorties (20a) agencées sous chaque chariot (12) quand il est agencé dans la première position respective et deux deuxièmes sorties (20b) agencées sous chaque chariot quand il est agencé dans une position de stationnement différente ; lesdites premières/deuxièmes sorties sont adaptées pour recevoir les objets postaux qui sont déchargés depuis des parties d'extrémité opposées des chariots (15a, 15b) de modules contigus à la suite du mouvement de sa courroie (16) ;
- une unité de commande électronique (25) dudit dispositif de transport adaptée pour mettre en oeuvre :
- un mode de transport pour transporter des articles, dans lequel au moins une paire de chariots appartenant à des modules adjacents successifs est agencée dans des positions de stationnement respectives et les articles postaux avancent le long de ladite première direction rectiligne (D1), transitant d'un module au module adjacent sous l'action des courroies (16), qui se déplacent dans la même direction ; et
- un mode de décharge pour déchargement vers quatre sorties A, B, C et D, dans lequel au moins un chariot (12) d'un module intermédiaire sélectionné est agencé dans la première ou la seconde position et au moins un des chariots (12) appartenant à des modules adjacents à celui sélectionné est agencé dans une seconde ou première position différente ; le mouvement de la courroie du chariot du module sélectionné vers le module adjacent suivant permet l'orientation des articules postaux portés par la courroie (16) vers une sortie B ou une sortie D appartenant aux premières/deuxièmes sorties du module adjacent suivant ; le mouvement de la courroie vers le module adjacent précédent permet l'orientation des articles postaux portés par la courroie (16) soit vers une sortie A soit vers une sortie C appartenant aux premières/deuxièmes sorties du module adjacent précédent ; le mouvement de la courroie du chariot appartenant au module adjacent précédent vers le module sélectionné permet l'orientation des objets soit vers la sortie B soit vers la sortie D appartenant aux premières/deuxièmes sorties du module sélectionné ; le mouvement de la courroie du chariot appartenant au module adjacent suivant vers le module sélectionné permet l'orientation des objets soit vers la sortie A soit vers la sortie C appartenant aux premières/deuxièmes sorties du module sélectionné.

2. Dispositif selon la revendication 1, dans lequel un ou plusieurs chariots (12) peuvent être agencés dans un mode de stockage, selon lequel les fonctions suivantes sont mises en oeuvre :
a) une courroie (16) dépourvue d'articles postaux reçoit un article postal depuis la courroie d'un module adjacent et se déplace jusqu'à ce que cet article soit agencé dans la première partie de la courroie puis attend au moins un autre objet en provenance du module adjacent ;
b) une courroie (16) supportant au moins un article agencé sur la première partie de la courroie reçoit un autre article postal depuis la courroie d'un module adjacent en se déplaçant pour entraîner la translation de l'article précédent vers la deuxième partie et en recevant l'autre objet dans la première moitié de la partie ;
c) une courroie (16) qui supporte des articles postaux agencés sur la deuxième partie des courroies se déplace pour dégager les articles portés sur le module adjacent en effectuant soit le transfert complet soit un transfert partiel des articles agencés uniquement sur la deuxième partie.

3. Dispositif selon la revendication 2, dans lequel lesdites opérations b) et c) peuvent être réalisées simultanément.

4. Dispositif selon l'une quelconque des revendications précédentes, dans lequel chaque chariot (12) a une forme rectangulaire dans le plan avec un côté plus long sensiblement de longueur égale à un premier côté du périmètre du module (10) et un côté plus court inférieur ou égale à la moitié du côté d'un deuxième côté du périmètre du module (10) ; quand le chariot est agencé sur la première position, le chariot couvre une première partie de la superficie du module, alors que lorsque le chariot est agencé sur la seconde position, le chariot couvre une partie différente de la superficie du module.

5. Dispositif selon l'une quelconque des revendications précédentes, dans lequel chaque module (10) définit quatre sorties de décharge constituées de contenants respectifs (20) portés par un cadre (11) du module (10) ; les contenants (20) sont accessibles à l'aide d'ouvertures d'entrée (22) agencées sous le plan sur lequel les chariots (12) sont mobiles.

6. Dispositif selon l'une quelconque des revendications précédentes, dans lequel les ouvertures (22) sont agencées symétriquement dans le module (10) selon un agencement matriciel.

7. Dispositif selon la revendication 6, dans lequel les ouvertures (22) ont, sur une vue en plan, une forme rectangulaire avec des côtés légèrement plus petits que la moitié des côtés du module (10).

8. Dispositif selon l'une quelconque des revendications précédentes, dans lequel la longueur de chaque chariot mesurée le long de la première direction est sensiblement égale à l'espace occupé par le cadre (11) qui loge des paires de sorties agencées côte à côte le long de ladite première direction.

9. Dispositif selon la revendication 5, dans lequel chaque chariot (12) est mobile le long d'au moins une paire de guides rectilignes (14) portés par une partie supérieure d'un cadre (11) dudit module.

10. Dispositif selon la revendication 9, dans lequel guide rectiligne est défini par une paroi plate allongée délimitée, le long de la direction D2, par un premier bord plus long près des ouvertures (22) et par un deuxième bord plus long distant des ouvertures (22), qui est agencé à une hauteur plus élevée que la hauteur du premier bord ; ladite paroi plate est agencée inclinée par rapport à la verticale et forme une goulotte capable d'aider les articles postaux qui heurtent accidentellement le guide à tomber vers l'ouverture (22).

11. Dispositif selon l'une quelconque des revendications précédentes, dans lequel le module d'extrémité à distance (10) par rapport à l'entrée depuis laquelle les articles postaux sont acheminés jusqu'au système (1) est pourvu d'une courroie raccourcie ayant une longueur égale à la moitié de la longueur des autres courroies (16).

12. Dispositif selon l'une quelconque des revendications précédentes, dans lequel ladite courroie (16) est pourvue de bords périphériques surélevés qui s'étendent le long de ladite première direction (D1).
